# FASCICULE DE BREVET EUROPEEN

(11) **EP 3 465 892 B1**
(45) Date de publication et mention de la délivrance du brevet: **17.02.2021**
(21) Numéro de dépôt: 17731239.4
(22) Date de dépôt: 31.05.2017
(51) Int. Cl.: H02K 29/06

(54) **MACHINE ÉLECTRIQUE TOURNANTE MUNIE D'UNE PLAQUE DE MAINTIEN D'UN CAPTEUR DE POSITION ANGULAIRE DU ROTOR**
ELEKTRISCHE DREHMASCHINE MIT HALTEPLATTE FÜR EINEN SENSOR DER WINKELPOSITION DES ROTORS
ROTARY ELECTRIC MACHINE EQUIPPED WITH A RETAINING PLATE FOR A SENSOR OF THE ANGULAR POSITION OF THE ROTOR

(30) Priorité: 31.05.2016 FR 1654908
(43) Date de publication de la demande: 10.04.2019
(73) Titulaire: Valeo Equipements Electriques Moteur, 94046 Créteil Cedex (FR)
(72) Inventeur: BOUARROUDJ, Lilya, 94046 Creteil (FR); SEIDENBINDER, Régis, 94046 Creteil (FR); MATT, Jean-Claude, 94046 Creteil (FR); BOUSSICOT, Frédéric, 94046 Creteil (FR)
(74) Mandataire: Cardon, Nicolas
(86) Numéro de dépôt international: PCT/FR2017/051363
(87) Numéro de publication internationale: WO 2017/207926

(56) Documents cités:
- CN-A- 105 281 497
- DE-U1- 9 315 994
- FR-A1- 2 998 734
- JP-A- 2007 089 312
- JP-A- 2008 109 834
- JP-A- 2012 147 550

## Description

La présente invention porte sur une machine électrique tournante munie d'une plaque de maintien d'un capteur de position angulaire du rotor. L'invention trouve une application particulièrement avantageuse, mais non exclusive, avec les machines électriques réversibles de forte puissance pouvant fonctionner en mode alternateur et en mode moteur accouplées avec un élément hôte tel qu'une boîte de vitesses.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre sur des paliers par l'intermédiaire de roulements. Le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forment des chignons faisant saillie de part et d'autre du corps du stator. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés connectés en étoile ou en triangle dont les sorties sont reliées à un module électrique de commande.

La machine comporte des moyens de suivi de la position du rotor afin de pouvoir injecté au moment adapté le courant dans les phases du stator. Ces moyens de suivi comprennent une cible annulaire magnétique montée sur un porte-cible solidaire en rotation de l'arbre de la machine, et au moins un capteur fixe de type à effet Hall disposé à proximité de la cible. Sous l'effet de la rotation de la cible conjointement avec l'arbre, le champ magnétique reçu par le capteur varie. Le capteur est relié au module de commande, et transmet à celui-ci des signaux fonction des champs magnétiques reçus, ce module traitant lesdits signaux pour en déduire la position angulaire ainsi que la vitesse du rotor. Dans certaines configurations, le réglage de la position angulaire du capteur est effectué via des moyens encombrants associés à un porte-capteur difficile à monter sur la machine électrique.

Le document CN 105 281 497 A décrit un capteur (92) avec un tel système de réglage (103-105).

Le document JP 2008 109834 A décrit un capteur (8) serré entre un palier (12) et une plaque de maintien (20).

La présente invention vise à remédier efficacement à ces inconvénients en proposant une machine électrique tournante, notamment pour véhicule automobile, comportant:
- un rotor monté à rotation autour d'un axe et monté sur un arbre,
- au moins un palier comportant une ouverture centrale pour le passage dudit arbre, ledit palier comportant un logement traversant,
- au moins un capteur de position angulaire dudit rotor, ledit capteur de position étant monté autour dudit arbre,
- une plaque de maintien étant fixée sur ledit palier et venant en contact avec une portion dudit capteur de position, de sorte que ledit capteur de position est serré entre ledit palier et ladite plaque de maintien,
caractérisée en ce que ladite plaque de maintien est agencée pour appliquer un couple de blocage en rotation prédéterminé suffisant pour résister aux vibrations de ladite machine électrique tournante et être surmonté par un couple appliqué par un outil de réglage de la position angulaire dudit capteur de position.

L'invention permet ainsi, grâce à l'utilisation d'une plaque de maintien du capteur, d'améliorer la compacité de l'ensemble tout en facilitant son montage sur la machine électrique.

Selon une réalisation, le capteur de position s'étend au moins partiellement dans ledit logement traversant.

Selon une réalisation, ladite plaque de maintien est agencée pour assurer un blocage axial et un blocage en rotation dudit capteur de position.

Selon une réalisation, ledit capteur de position comporte un rebord notamment annulaire, le rebord étant en saillie axiale et contre lequel est en appui ladite plaque de maintien.

Selon l'invention ladite plaque de maintien applique un couple de blocage en rotation prédéterminé suffisant pour résister aux vibrations de ladite machine électrique tournante et être surmonté par un couple appliqué par un outil de réglage de la position angulaire dudit capteur de position.

Selon une réalisation, ledit capteur de position comporte une portion annulaire délimitant un trou traversant pour le passage dudit arbre, ladite portion annulaire comportant en périphérie interne au moins une creusure destinée à recevoir une forme correspondante dudit outil de réglage.

Selon une réalisation, ledit capteur de position comporte un bras assurant une liaison mécanique entre ladite portion annulaire et une cuvette définissant un logement pour des sondes de mesure, notamment de type à effet Hall.

Selon une réalisation, ledit bras est en appui par une face contre ledit palier et par une face opposée contre ladite plaque de maintien via ledit rebord en saillie.

Selon une réalisation, ladite cuvette s'étend axialement vers l'intérieur de ladite machine électrique tournante.

Selon une réalisation, ledit logement de capteur dudit palier présente une dimension circonférentielle supérieure à celle de ladite cuvette pour permettre un réglage en rotation dudit capteur de position.

Selon une réalisation, ladite machine électrique tournante comporte un système de verrouillage en rotation dudit capteur de position. Outre le verrouillage, un tel système permet la détection d'une modification non-autorisée de la position du capteur.

Selon une réalisation, ledit capteur de position comporte une portion en saillie déformable destinée à s'insérer dans au moins une échancrure radiale parmi une pluralité ménagées suivant un secteur angulaire d'une périphérie interne de ladite plaque de maintien.

Selon une réalisation, ledit capteur de position comporte une gorge circonférentielle dans laquelle une patte de ladite plaque de maintien est apte à être insérée par déformation, notamment suivant une direction axiale.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective d'une machine électrique tournante selon la présente invention;
La figure 2 est une vue en perspective de la machine électrique tournante de la figure 1 sans le carter;
La figure 3 est une vue en coupe longitudinale de la machine électrique tournante selon la présente invention;
La figure 4 est une représentation schématique d'un assemblage de la machine électrique tournante de la figure 1 avec une boîte de vitesses;
La figure 5 est une vue de dessus d'un stator de la machine électrique tournante selon la présente invention;
La figure 6 est une vue en perspective d'un capteur de position pour mesurer la position angulaire du rotor de la machine électrique tournante selon l'invention;
La figure 7 est une vue en perspective de l'extrémité de la machine électrique tournante selon l'invention illustrant le montage du capteur de position de la figure 6 sur un palier de la machine électrique tournante;
La figure 8 est une vue en perspective illustrant le montage de la plaque de maintien du capteur de position;
La figure 9a est une vue en perspective illustrant le réglage angulaire du capteur de position à l'aide d'un outil dédié après le montage de la plaque de maintien;
La figure 9b est une vue en perspective de la tête de l'outil utilisé pour le réglage angulaire du capteur de position;
Les figures 10a et 10b sont des vues en perspective illustrant un premier mode de réalisation d'un système de verrouillage du capteur de position respectivement avant et après déformation d'une portion en saillie dudit capteur de position;
Les figures 11a et 11b sont des vues en perspective éclatée et de dessus illustrant un deuxième mode de réalisation du système de verrouillage du capteur de position respectivement avant et après déformation d'une patte portée par la plaque de maintien.

Les éléments identiques, similaires, ou analogues, conservent la même référence d'une figure à l'autre. Dans la suite de la description, on entend par un élément "avant", un élément situé du côté du pignon porté par l'arbre de la machine et par élément "arrière" un élément situé du côté opposé.

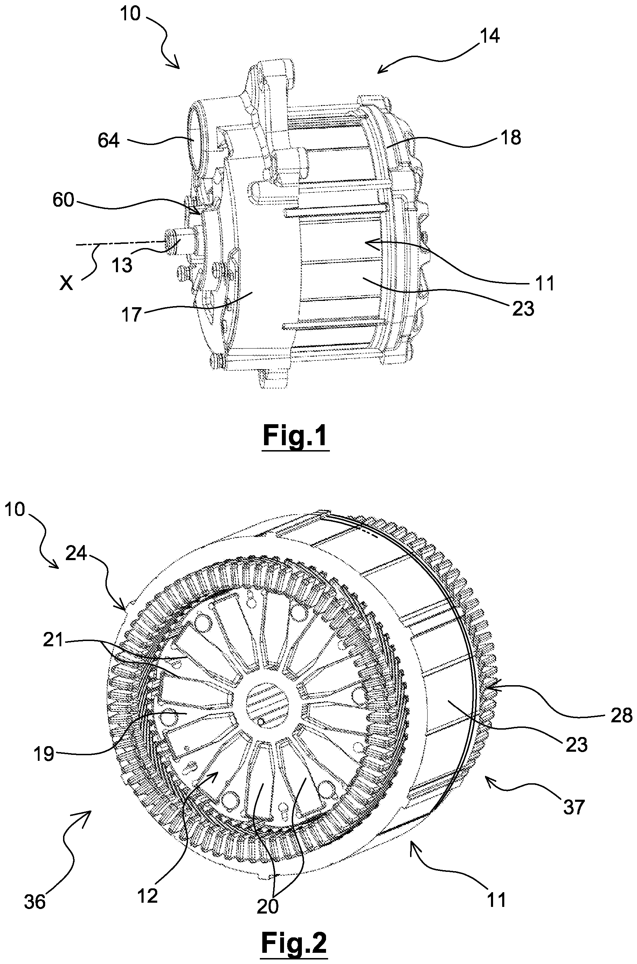

Les figures 1, 2, et 3 montrent une machine électrique tournante 10 comportant un stator 11 polyphasé entourant un rotor 12 monté sur un arbre 13 d'axe X. Le stator 11 entoure le rotor 12 avec présence d'un entrefer 15 entre la périphérie interne du stator 11 et la périphérie externe du rotor 12. Le stator 11 est monté dans un carter 14 muni d'un palier avant 17 et d'un palier arrière 18 dont la configuration est décrite plus en détails ci-après.

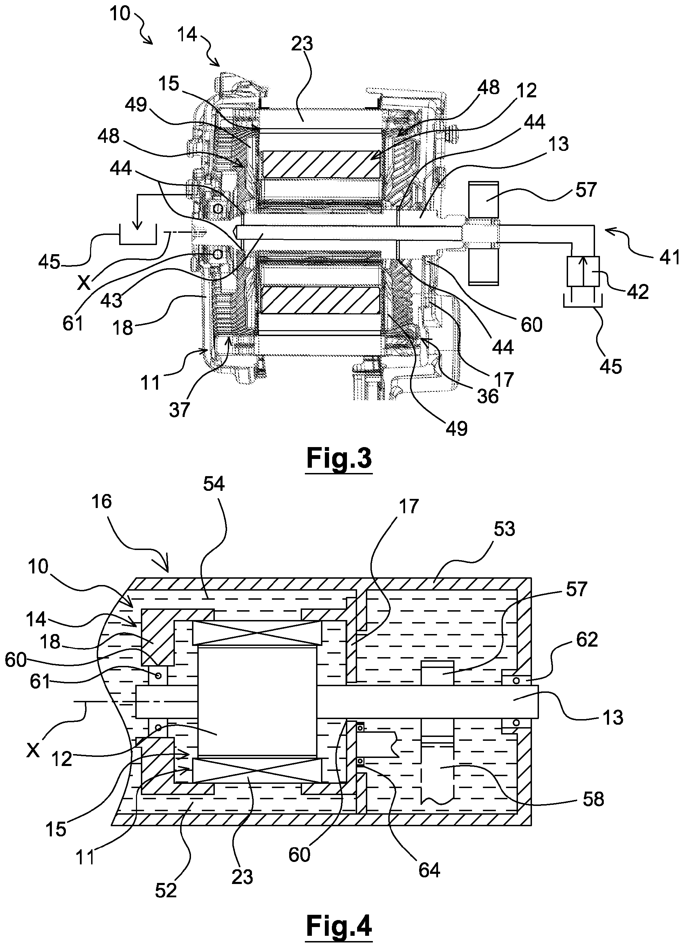

Cette machine électrique 10 est destinée à être accouplée à une boîte de vitesses 16 visible en figure 4 appartenant à une chaîne de traction de véhicule automobile. La machine 10 est apte à fonctionner dans un mode alternateur pour fournir notamment de l'énergie à la batterie et au réseau de bord du véhicule, et dans un mode moteur, non seulement pour assurer le démarrage du moteur thermique du véhicule, mais également pour participer à la traction du véhicule seule ou en combinaison avec le moteur thermique. La puissance de la machine 10 pourra être comprise entre 15kW et 50kW.

Plus précisément, comme on peut le voir sur la figure 2, le rotor 12 comporte un corps 19 sous la forme d'un paquet de tôles. Des aimants permanents 20 sont implantés dans des cavités 21 du corps 19. Les aimants 20 pourront être en terre rare ou en ferrite selon les applications et la puissance recherchée de la machine 10. Alternativement, les pôles du rotor 12 pourront être formés par des bobines. La machine 10 est ainsi dépourvue de balai, ce qui autorise son immersion dans le bain d'huile contenu dans la boîte de vitesses 16, comme cela est expliqué ci-après.

Par ailleurs, le stator 11 comporte un corps 23 constitué par un paquet de tôles ainsi qu'un bobinage 24. Le corps 23 est formé par un empilement de feuilles de tôles indépendantes les unes des autres et maintenues sous forme de paquet au moyen d'un système de fixation adapté.

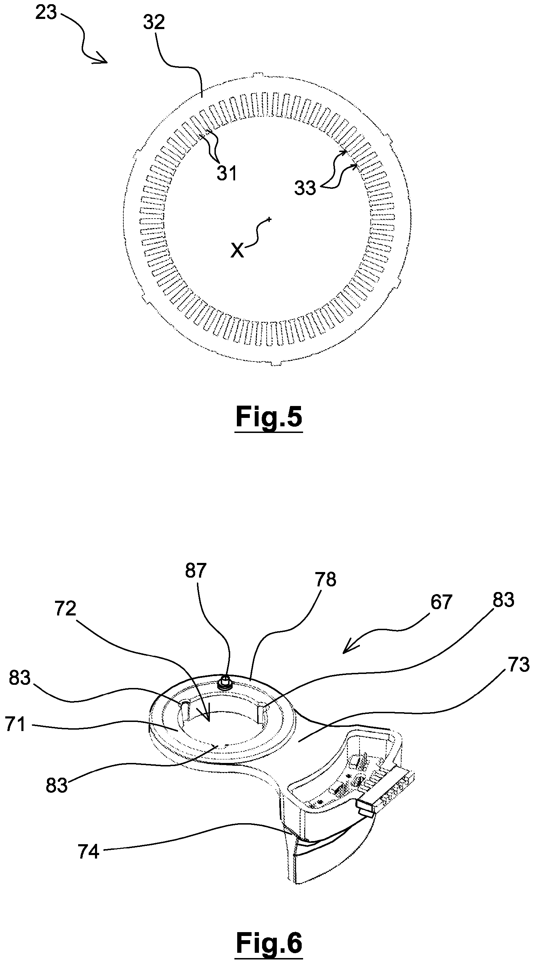

Le corps 23 montré en détail sur la figure 5 est muni de dents 31 s'étendant depuis une périphérie interne d'une culasse annulaire 32 et délimitant deux à deux des encoches 33 pour le montage du bobinage 24 du stator 11. Ainsi, deux encoches 33 successives sont séparées par une dent 31. Les encoches 33 débouchent axialement dans les faces d'extrémité axiale et radialement vers l'intérieur du corps de stator 23.

Le bobinage 24 comporte un ensemble d'enroulements de phase traversant les encoches 33 et formant des chignons 36, 37 s'étendant en saillie de part et d'autre du corps de stator 23 (cf. figure 2). Les enroulements de phase sont obtenus ici à partir d'éléments conducteurs en forme d'épingles reliés entre eux par exemple par soudage. Ces enroulements sont par exemple des enroulements triphasés connectés en étoile ou en triangle. Les sorties de phase de ces enroulements de phase sont destinées à être reliées à un module électrique de commande.

La machine électrique 10 est refroidie au moyen d'un circuit de refroidissement 41 illustré sur la figure 3 permettant l'écoulement d'un liquide de refroidissement, en l'occurrence de l'huile, à l'intérieur de la machine 10. A cet effet, le circuit de refroidissement 41 comporte une pompe 42 acheminant l'huile dans un alésage axial central 43 réalisé dans l'arbre 13 et vers au moins deux orifices 44 débouchant radialement et disposés axialement de part et d'autre du rotor 12 pour diffuser le liquide de refroidissement à l'intérieur de la machine 10.

Une telle configuration permet ainsi d'acheminer le liquide de refroidissement vers les deux faces d'extrémité axiale du rotor 12. Le circuit de refroidissement 41 fonctionne en boucle fermée, de telle façon que l'huile est prélevée par la pompe 42 dans un réservoir 45 et est récupérée après circulation dans la machine 10 dans ce réservoir 45. Le réservoir 45 pourra correspondre au volume d'huile contenu dans la boîte de vitesses 16.

En outre, le rotor 12 comporte deux flasques 48 plaqués chacun contre une face d'extrémité axiale du rotor 12. Ces flasques 48 assurent une retenue axiale des aimants 20 à l'intérieur des cavités 21 et servent également à équilibrer le rotor 12. Chaque flasque 48 pourra être muni avantageusement d'au moins un organe de projection 49, constitué par une pale, agencé pour projeter par centrifugation le liquide de refroidissement arrivant sur la face d'extrémité correspondante vers les chignons du bobinage 36, 37.

Comme on peut le voir sur la figure 4, la machine 10 est positionnée à l'intérieur du volume 52 délimité par un carter 53 de la boîte de vitesses 16 contenant de l'huile 54 utilisée pour la lubrification des différents composants mécaniques de la boîte de vitesses 16 et pour réaliser le refroidissement de la machine électrique 10. Le liquide de refroidissement est projeté sur la périphérie externe de la machine électrique 10 pour assurer son refroidissement. En l'occurrence, le liquide 54 contenu dans la boîte de vitesses 16 est également utilisé pour refroidir intérieurement la machine 10 via le circuit de refroidissement 41. Toutefois, en variante, un liquide différent de celui contenu dans la boîte de vitesses pourrait être utilisé pour le refroidissement interne de la machine 10.

La machine électrique 10 est disposée dans le volume 52, de telle façon que le pignon 57 porté par l'arbre 13 engrène avec un pignon 58 correspondant de la boîte de vitesses 16. A cet effet, le palier avant 17 et le palier arrière 18 sont munis d'une ouverture centrale 60 pour autoriser le passage de l'arbre 13. Le palier arrière 18 porte un roulement 61, tel qu'un roulement à billes ou à aiguilles pour le montage à rotation de l'arbre 13.

En outre, l'extrémité libre de l'arbre 13 dépassant du carter 14 de la machine électrique 10 est montée rotative via un roulement 62 porté par le carter 53 de la boîte de vitesses 16, tel que montré sur la figure 4. Ainsi, la machine 10 comporte un seul roulement 61, ce qui facilite le montage de la machine 10 à l'intérieur de la boîte de vitesses 16 et limite les risques d'hyperstatisme de l'ensemble.

Le palier avant 17 pourra comporter un support de roulement 64 disposé sur une face radiale. Ce support de roulement 64 est formé par une paroi annulaire s'étendant en saillie par rapport à une surface externe radiale du palier 17. Le support de roulement 64 est destiné à recevoir un roulement (non représenté) d'un arbre de la boîte de vitesses 16.

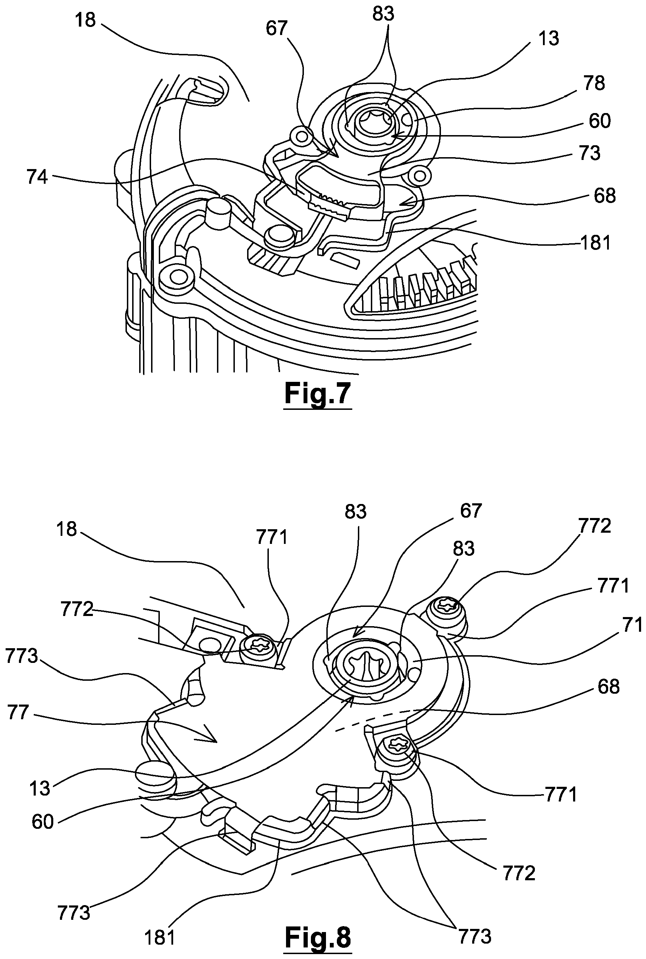

Comme cela est visible en figure 7, un capteur de position 67 apte à mesurer la position angulaire du rotor 12 est monté autour de l'arbre 13. Ce capteur 67 s'étend au moins partiellement dans un logement traversant 68 ménagé dans une paroi du palier arrière 18.

Le capteur 67 montré en détails sur la figure 6 comporte une portion annulaire 71 délimitant un trou traversant 72 pour le passage de l'arbre 13, et un bras 73 assurant la liaison mécanique entre ladite portion annulaire 71 et une cuvette 74 définissant un logement pour des sondes par exemple de type à effet Hall.

La cuvette 74 s'étend axialement vers l'intérieur de la machine 10 à travers le logement 68. Le logement 68 pour le capteur 67 présente une dimension circonférentielle supérieure à celle de la cuvette 74 pour permettre un réglage en rotation du capteur 67.

Comme on peut le voir sur la figure 8, une plaque de maintien 77 est fixée sur le palier 18 et vient en contact avec une portion du capteur 67, de sorte que le capteur 67 est serré entre le palier 18 et la plaque 77. La plaque 77 est agencée pour assurer un blocage axial et un blocage en rotation du capteur 67. A cet effet, la plaque de maintien 77 comporte dans l'exemple représenté trois oreilles saillantes 771 issue d'une périphérie externe d'une partie de forme annulaire s'étendant au-dessus de la portion 71. Ces oreilles 771 sont dotées de trous pour le passage d'organes de fixation 772, en l'occurrence des vis. La plaque 77 pourra également être munie de languettes 773 sur sa périphérie externe qui sont rabattues contre une surépaisseur 181 du palier 18 ayant une forme suivant celle de la périphérie de la plaque 77. Une telle configuration permet de limiter au maximum les déplacements angulaires de la plaque 77.

Par ailleurs, comme cela est illustré par les figures 6 et 7, le capteur 67 pourra comporter un rebord 78 annulaire en saillie axiale contre lequel est en appui la plaque de maintien 77. Le bras 73 est alors en appui par une face contre le palier 18 et par une face opposée contre la plaque 77 via le rebord 78 en saillie.

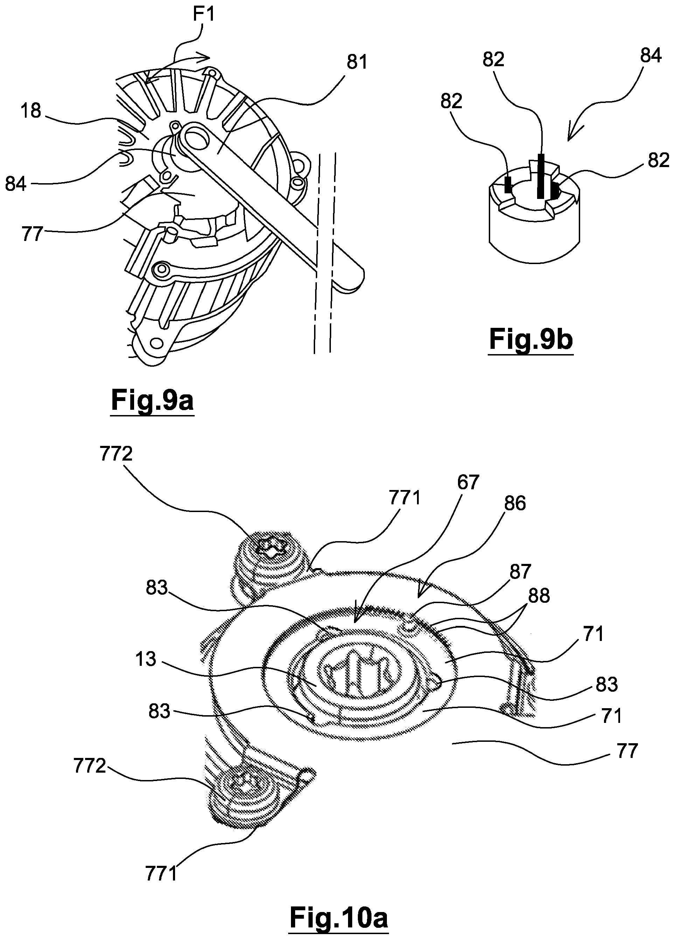

La plaque de maintien 77 applique sur le capteur 67 un couple de blocage en rotation prédéterminé suffisant pour résister aux vibrations de la machine 10 et être surmonté par un couple appliqué par un outil de réglage 81 de la position angulaire du capteur 67, tel que cela est montré sur la figure 9a.

Ainsi, une fois la plaque 77 serrée pour maintenir le capteur 67, l'opérateur peut manipuler un outil de réglage 81 dont les formes 82 s'engagent dans des creusures 83 complémentaires ménagées dans le capteur 67. Comme cela est montré sur la figure 9b, la tête 84 de l'outil 81 de réglage pourra par exemple comporter des plots cylindriques 82 destinés à s'insérer dans des creusures cylindriques 83 de forme complémentaire réalisées en périphérie interne de la portion annulaire 71 du capteur 67. Par rotation de l'outil 81 dans un sens de rotation souhaité (cf. flèche F1 sur la figure 9a), l'opérateur applique sur le capteur 67 un couple supérieur au couple de blocage généré par la plaque 77 afin de pouvoir régler la position circonférentielle du capteur 71 par rapport au palier 18.

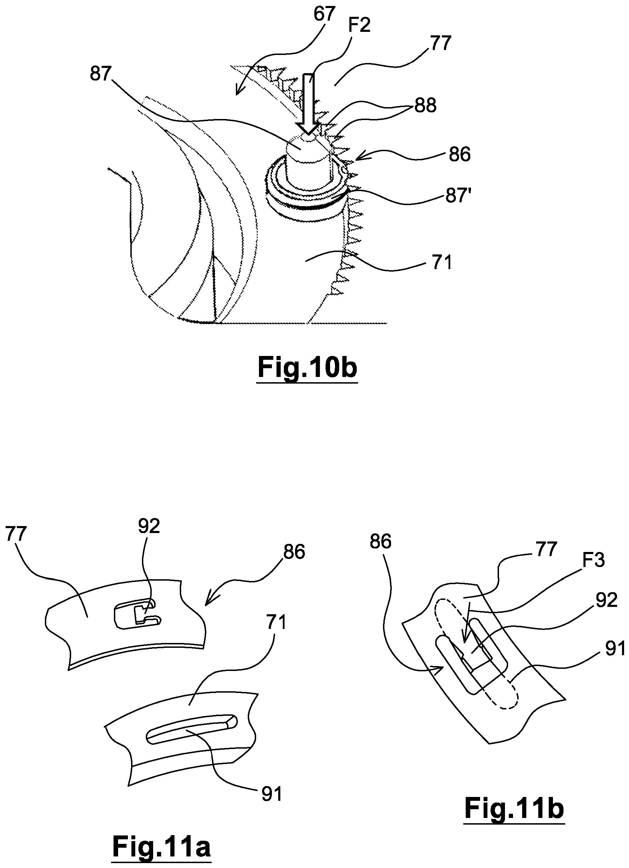

De préférence, on prévoit un système de verrouillage 86 pour verrouiller en rotation la position du capteur 67 une fois le réglage terminé à l'aide de l'outil 81. Suivant un premier mode de réalisation montré sur les figures 10a et 10b, le capteur 67 comporte une portion en saillie 87 qui est déformable, par exemple à chaud, et est destinée à s'insérer dans au moins une échancrure radiale 88 parmi une pluralité d'échancrures ménagées suivant un secteur angulaire de la périphérie interne de la plaque 77. Les échancrures 88 pourront être obtenues par réalisation d'un profil dentelé en périphérie interne de la partie annulaire de la plaque 77, les échancrures 88 s'étendant entre deux dents successives sur le secteur angulaire précité.

Dans un exemple de réalisation, la portion en saillie 87 pourra être déformée par bouterollage à chaud suivant la flèche F2 pour s'insérer dans au moins une échancrure 88 de la plaque 77. La configuration déformée de la portion 87 est référencée 87' sur la figure 10b. Outre la fonction de verrouillage, le système 86 a une fonction de sécurité, dans la mesure où la rupture de la liaison mécanique entre le capteur 67 et la plaque 77 permet de détecter une modification non-autorisée de la position du capteur 67.

Suivant un deuxième mode de réalisation du système de verrouillage 86 montré sur les figures 11a et 11b, le capteur 67 comporte une gorge 91 circonférentielle traversante dans laquelle une patte 92 de la plaque 77 est insérée par déformation notamment suivant une direction axiale selon la flèche F3. A cet effet, la partie de la plaque 77 portant la patte 92 est superposée axialement au-dessus de la gorge 91. La patte 92 déformable s'étend dans un évidement de la plaque 77 et présente du côté de son extrémité libre une forme en T ayant une largeur supérieure à celle de la gorge 91 pour assurer la retenue du capteur 67 après insertion de la patte 92 à travers la gorge 91.

A l'état initial, c'est-à-dire non déformé, la patte 92 se situe dans le plan de la plaque de maintien 77 (cf. figure 11a), tandis qu'à l'état déformé la patte 92 s'étend à l'intérieur de la gorge 91 suivant une direction inclinée, par exemple perpendiculaire au plan d'extension de la plaque 77, de telle façon que les bords du T de la patte 92 forment butée contre la portion du capteur 67 délimitant la gorge 91 (cf. figure 11b).

Bien entendu, la description qui précède a été donnée à titre d'exemple uniquement et ne limite pas le domaine de l'invention dont on ne sortirait pas en remplaçant les différents éléments par tous autres équivalents, dans le cadre des revendications ci-après.

## Revendications

1. Machine électrique tournante, notamment pour véhicule automobile, comportant:
- un rotor (12) monté à rotation autour d'un axe (X) sur un arbre (13),
- au moins un palier (18) comportant une ouverture centrale (60) pour le passage dudit arbre (13), ledit palier (18) comportant un logement (68) traversant,
- au moins un capteur (67) de position angulaire dudit rotor (12), ledit capteur de position (67) étant monté autour dudit arbre (13),
- une plaque de maintien (77) étant fixée sur ledit palier (18) et venant en contact avec une portion dudit capteur de position (67), de sorte que ledit capteur de position (67) est serré entre ledit palier (18) et ladite plaque de maintien (77)
**caractérisée en ce que** ladite plaque de maintien (77) est agencée pour appliquer un couple de blocage en rotation prédéterminé suffisant pour résister aux vibrations de ladite machine électrique tournante (10) et être surmonté par un couple appliqué par un outil de réglage (81) de la position angulaire dudit capteur de position (67).

2. Machine électrique tournante selon la revendication 1, **caractérisée en ce que** ladite plaque de maintien (77) est agencée pour assurer un blocage axial et un blocage en rotation dudit capteur de position (67).

3. Machine électrique tournante selon la revendication 1 ou 2, **caractérisée en ce que** ledit capteur de position (67) comporte un rebord (78) notamment annulaire, le rebord (78) étant en saillie axiale et contre lequel est en appui ladite plaque de maintien (77).

4. Machine électrique tournante selon l'une quelconque des revendications 1 à 3, **caractérisée en ce que** ledit capteur de position (67) comporte une portion annulaire (71) délimitant un trou traversant (72) pour le passage dudit arbre (13), ladite portion annulaire (71) comportant en périphérie interne au moins une creusure (83) destinée à recevoir une forme (82) correspondante dudit outil de réglage (81).

5. Machine électrique tournante selon la revendication 4, **caractérisée en ce que** ledit capteur de position (67) comporte un bras (73) assurant une liaison mécanique entre ladite portion annulaire (71) et une cuvette (74) définissant un logement pour des sondes de mesure, notamment de type à effet Hall.

6. Machine électrique tournante selon les revendications 3 et 5, **caractérisée en ce que** ledit bras (73) est en appui par une face contre ledit palier (18) et par une face opposée contre ladite plaque de maintien (77) via ledit rebord en saillie (78).

7. Machine électrique tournante selon la revendication 5 ou 6, **caractérisée en ce que** ladite cuvette (74) s'étend axialement vers l'intérieur de ladite machine électrique tournante (10).

8. Machine électrique tournante selon l'une quelconque des revendications 5 à 7, **caractérisée en ce que** ledit logement (68) de capteur dudit palier (18) présente une dimension circonférentielle supérieure à celle de ladite cuvette (74) pour permettre un réglage en rotation dudit capteur de position (67).

9. Machine électrique tournante selon l'une quelconque des revendications 1 à 8, **caractérisée en ce qu'**elle comporte un système de verrouillage (86) en rotation dudit capteur de position (67).

10. Machine électrique tournante selon la revendication 9, **caractérisée en ce que** ledit capteur de position (67) comporte une portion en saillie (87) déformable destinée à s'insérer dans au moins une échancrure radiale (88) parmi une pluralité ménagées suivant un secteur angulaire d'une périphérie interne de ladite plaque de maintien (77).

11. Machine électrique tournante selon la revendication 9, **caractérisée en ce que** ledit capteur de position (67) comporte une gorge (91) circonférentielle dans laquelle une patte (92) de ladite plaque de maintien (77) est apte à être insérée par déformation, notamment suivant une direction axiale.

## Patentansprüche

1. Drehende elektrische Maschine, insbesondere für ein Kraftfahrzeug, umfassend:
- einen Rotor (12), der um eine Achse (X) drehbar auf einer Welle (13) montiert ist,
- mindestens ein Lager (18), das eine zentrale Öffnung (60) zum Durchführen der Welle (13) umfasst, wobei das Lager (18) eine durchgehende Aufnahme (68) umfasst,
- mindestens einen Winkelpositionssensor (67) für den Rotor (12), wobei der Positionssensor (67) um die Welle (13) herum montiert ist,
- eine Halteplatte (77) an dem Lager (18) befestigt ist und mit einem Abschnitt des Positionssensors (67) in Kontakt ist, so dass der Positionssensor (67) zwischen das Lager (18) und die Halteplatte (77) geklemmt ist,
**dadurch gekennzeichnet, dass** die Halteplatte (77) dazu eingerichtet ist, ein vorbestimmtes Drehblockiermoment aufzubringen, das ausreicht, um den Schwingungen der drehenden elektrischen Maschine (10) standzuhalten und von einem Moment überwunden zu werden, das von einem Einstellwerkzeug (81) zum Einstellen der Winkelposition des Positionssensors (67) aufgebracht wird.

2. Drehende elektrische Maschine nach Anspruch 1, **dadurch gekennzeichnet, dass** die Halteplatte (77) dazu eingerichtet ist, eine axiale Blockierung und eine Drehblockierung des Positionssensors (67) zu gewährleisten.

3. Drehende elektrische Maschine nach Anspruch 1 oder 2, **dadurch gekennzeichnet, dass** der Positionssensor (67) einen, insbesondere ringförmigen, Rand (78) umfasst, wobei der Rand (78) axial vorspringt und an ihm die Halteplatte (77) in Anlage ist.

4. Drehende elektrische Maschine nach einem der Ansprüche 1 bis 3, **dadurch gekennzeichnet, dass** der Positionssensor (67) einen ringförmigen Abschnitt (71) umfasst, der ein durchgehendes Loch (72) zum Durchführen der Welle (13) begrenzt, wobei der ringförmige Abschnitt (71) am inneren Umfang mindestens eine Vertiefung (83) umfasst, die dazu bestimmt ist, eine passende Form (82) des Einstellwerkzeugs (81) aufzunehmen.

5. Drehende elektrische Maschine nach Anspruch 4, **dadurch gekennzeichnet, dass** der Positionssensor (67) einen Arm (73) umfasst, der eine mechanische Verbindung zwischen dem ringförmigen Abschnitt (71) und einer Wanne (74) gewährleistet, die eine Aufnahme für Messsonden, insbesondere vom Hall-Effekt-Typ, bildet.

6. Drehende elektrische Maschine nach den Ansprüchen 3 und 5, **dadurch gekennzeichnet, dass** der Arm (73) mit einer Seite an dem Lager (18) und mit einer entgegengesetzten Seite über den vorspringenden Rand (78) an der Halteplatte (77) in Anlage ist.

7. Drehende elektrische Maschine nach Anspruch 5 oder 6, **dadurch gekennzeichnet, dass** sich die Wanne (74) axial zum Inneren der drehenden elektrischen Maschine (10) hin erstreckt.

8. Drehende elektrische Maschine nach einem der Ansprüche 5 bis 7, **dadurch gekennzeichnet, dass** die Sensoraufnahme (68) des Lagers (18) ein größeres umfängliches Maß als die Wanne (74) aufweist, um eine Dreheinstellung des Positionssensor (67) zu ermöglichen.

9. Drehende elektrische Maschine nach einem der Ansprüche 1 bis 8, **dadurch gekennzeichnet, dass** sie ein Sperrsystem (86) zur Drehsperre des Positionssensors (67) umfasst.

10. Drehende elektrische Maschine nach Anspruch 9, **dadurch gekennzeichnet, dass** der Positionssensor (67) einen verformbaren vorspringenden Abschnitt (87) umfasst, der dazu bestimmt ist, in mindestens einen radialen Ausschnitt (88) unter einer Vielzahl eingeführt zu werden, die entlang eines Winkelsektors eines Innenumfangs der Halteplatte (77) ausgebildet sind.

11. Drehende elektrische Maschine nach Anspruch 9, **dadurch gekennzeichnet, dass** der Positionssensor (67) eine umfängliche Rille (91) umfasst, in die eine Zunge (92) der Halteplatte (77) durch Verformung, insbesondere entlang einer axialen Richtung, eingeführt werden kann.

## Claims

1. Rotary electric machine, in particular for a motor vehicle, comprising:
- a rotor (12) mounted in rotation about an axis (X) on a shaft (13),
- at least one bearing (18) comprising a central opening (60) for said shaft (13) to pass through, said bearing (18) comprising a through-cavity (68),
- at least one sensor (67) for detecting the angular position of said rotor (12), said position sensor (67) being mounted about said shaft (13),
- a retaining plate (77) being secured to said bearing (18) and coming into contact with a portion of said position sensor (67) in such a way that said position sensor (67) is clamped between said bearing (18) and said retaining plate (77)
**characterized in that** said retaining plate (77) is arranged so as to apply a predetermined rotation-immobilizing torque that is sufficient to withstand the vibrations of said rotary electric machine (10) and that is surpassed by a torque applied by a tool (81) for adjusting the angular position of said position sensor (67).

2. Rotary electric machine according to Claim 1, **characterized in that** said retaining plate (77) is arranged so as to immobilize said position sensor (67) both axially and in rotation.

3. Rotary electric machine according to Claim 1 or 2, **characterized in that** said position sensor (67) comprises a rim (78), which is in particular annular, the rim (78) projecting axially and having said retaining plate (77) pressing against it.

4. Rotary electric machine according to any one of Claims 1 to 3, **characterized in that** said position sensor (67) comprises an annular portion (71) delimiting a through-hole (72) for said shaft (13) to pass through, said annular portion (71) comprising on its internal periphery at least one recess (83) intended to receive a corresponding shape (82) of said adjusting tool (81).

5. Rotary electric machine according to Claim 4, **characterized in that** said position sensor (67) comprises an arm (73) that provides a mechanical connection between said annular portion (71) and a dish (74) that defines a receptacle for measurement probes, in particular of the Hall-effect type.

6. Rotary electric machine according to Claims 3 and 5, **characterized in that** said arm (73) bears with one face against said bearing (18) and with an opposite face against said retaining plate (77) via said projecting rim (78).

7. Rotary electric machine according to Claim 5 or 6, **characterized in that** said dish (74) extends axially towards the inside of said rotary electric machine (10) .

8. Rotary electric machine according to any one of Claims 5 to 7, **characterized in that** said sensor receptacle (68) of said bearing (18) has a circumferential dimension that is greater than that of said dish (74) in order to permit adjustment in rotation of said position sensor (67).

9. Rotary electric machine according to any one of Claims 1 to 8, **characterized in that** it comprises a system (86) of locking said position sensor (67) in rotation.

10. Rotary electric machine according to Claim 9, **characterized in that** said position sensor (67) comprises a deformable projecting portion (87) that is intended to be inserted into at least one radial notch (88) among a plurality thereof that are arranged along an angular sector of an internal periphery of said retaining plate (77).

11. Rotary electric machine according to Claim 9, **characterized in that** said position sensor (67) comprises a circumferential channel (91) into which a tab (92) of said retaining plate (77) can be inserted by deformation, in particular in an axial direction.
